# EUROPEAN PATENT SPECIFICATION

(11) **EP 2 207 440 B1**
(45) Date of publication and mention of the grant of the patent: **14.09.2011**
(21) Application number: 08726706.8
(22) Date of filing: 11.03.2008
(51) Int. Cl.: A41D 31/02

(54) **BREATHABLE GARMENT HAVING A FLUID DRAINAGE LAYER**
ATMUNGSAKTIVES KLEIDUNGSSTÜCK MIT EINER FLUIDABFÜHRSCHICHT
VÊTEMENT POUVANT RESPIRER COMPORTANT UNE COUCHE D'ÉVACUATION DE FLUIDE

(30) Priority: 13.11.2007 US 2820 P
(43) Date of publication of application: 21.07.2010
(73) Proprietor: E. I. du Pont de Nemours and Company, Wilmington, DE 19898 (US)
(72) Inventor: CONLEY, Jill, A., Midlothian Virginia 23113 (US); MARIN, Robert, Anthony, Midlothian Virginia 23114 (US)
(74) Representative: Morf, Jan Stefan
(86) International application number: PCT/US2008/003213
(87) International publication number: WO 2009/064311

(56) References cited:
- WO-A-03/080905
- US-A- 4 420 521
- US-A- 5 204 156
- US-A1- 2005 048 860
- US-A1- 2008 070 463

## Description

### FIELD OF THE INVENTION

The present invention relates to garments that contain a breathable composite fabric of two nanofiber web layers and a fluid drainage layer there between, and inner and outer fabric layers enveloping the composite fabric.

### BACKGROUND

It has long been desired to make garments less susceptible to the strikethrough of fluids, e.g., rainwater, blood and oil, through the garments, particularly at points or regions of high pressure, such as at elbows and the seat area of pants.

It is well known to incorporate breathable and waterproof membranes into a garment in order to impart breathability to the garment while making it waterproof and therefore more comfortable to the user. For example expanded polytetrafluoroethylene membranes (ePTFE) have been used for this application.

Over time, soil impingement in the form of body oils and exudates can severely affect membrane performance by blocking the pores in the membrane. Attempts to protect the membrane by coating it with polymers that allow passage of moisture vapor cause a reduction of the breathability of the garment. There is therefore a tradeoff between lifetime and comfort.

It would be desirable to provide garments with improved strikethrough resistance, particularly at high-pressure areas, without adversely affecting the breathability of the garments.

US 4,420,521 discloses a garment according to the preamble of claim 1.

### SUMMARY OF THE INVENTION

The present invention relates to a garment comprising a breathable composite fabric, an outer fabric layer and an inner fabric layer, said breathable composite fabric comprising two nanofiber web layers and a porous fluid drainage layer disposed there between.

### DETAILED DESCRIPTION OF THE INVENTION

The terms "nanofiber layer," "nanofiber web layer," "nanofiber web" and "nanoweb layer" are used interchangeably herein to refer to a nonowoven that comprises nanofibers.

The term "nanofibers" as used herein refers to fibers having a number average diameter less than about 1000 nm, even less than about 800 nm, even between about 50 nm and 500 nm, and even between about 100 and 400 nm. In the case of non-round cross-sectional nanofibers, the term "diameter" as used herein refers to the greatest cross-sectional dimension.

The term "nonwoven" means a web including a multitude of randomly distributed fibers. The fibers generally can be bonded to each other or can be unbonded. The fibers can be staple fibers or continuous fibers. The fibers can comprise a single material or a multitude of materials, either as a combination of different fibers or as a combination of similar fibers each comprised of different materials.

By "garment" is meant any item that is worn by the user to cover or protect some region of the user's body from weather or other factors in the environment outside the body. For example coats, jackets, pants, hats, gloves, shoes, socks, and shirts are all considered garments under this definition.

The term "outer" when used to describe the location of a layer refers to the face of the garment that faces away form the wearer. The term "inner" refers to the user facing side of the garment.

The term "calendering" refers to the process of passing a web through a nip between two rolls. The rolls may be in contact with each other, or there may be a fixed or variable gap between the roll surfaces. An "unpatterned" roll is one which has a smooth surface within the capability of the process used to manufacture them. There are no points or patterns to deliberately produce a pattern on the web as it passed through the nip, unlike a point bonding roll.

The terms "scrim," "substrate" and "support layer" are used interchangeably to refer to any planar structure with which a nanoweb can be bonded, adhered, or laminated. Advantageously, the scrim layers useful in the present invention are spunbond nonwoven layers, but can be made from carded webs of nonwoven fibers and the like.

Nanofiber web layers for use in the composite fabric of the garment of the invention can be produced by electrospinning, such as classical electrospinning or electroblowing, and in certain circumstances by meltblowing processes. Classical electrospinning is a technique illustrated in U.S. Patent No. 4,127,706, wherein a high voltage is applied to a polymer in solution to create nanofibers and nonwoven mats. However, total throughput in electrospinning processes is too low to be commercially viable in forming heavier basis weight nanowebs.

The electroblowing process is disclosed in PCT Patent Publication No. WO 03/080905. A stream of polymeric solution comprising a polymer and a solvent is fed from a storage tank to a series of spinning nozzles within a spinneret, to which a high voltage is applied and through which the polymeric solution is discharged. Meanwhile, compressed air that is optionally heated is issued from air nozzles disposed in the sides of, or at the periphery of the spinning nozzle. The air is directed generally downward as a blowing gas stream which envelopes and forwards the newly issued polymeric solution and aids in the formation of the fibrous web, which is collected on a grounded porous collection belt above a vacuum chamber. The electroblowing process permits formation of commercial sizes and quantities of nanowebs at basis weights in excess of about 1 gsm, even as high as about 40 gsm or greater, in a relatively short time period.

Polymer materials that can be used in forming the nanowebs of the invention are not particularly limited and include both addition polymer and condensation polymer materials such as, polyacetals, polyamides, polyesters, polyolefins, cellulose ethers and cellulose esters, polyalkylene sulfides, polyarylene oxides, polysulfones, modified polysulfone polymers, and mixtures thereof. Preferred materials that fall within these generic classes include, poly (vinylchloride), polymethylmethacrylate (and other acrylic resins), polystyrene, and copolymers thereof (including ABA type block copolymers), poly (vinylidene fluoride), poly (vinylidene chloride), polyvinylalcohol in various degrees of hydrolysis (87% to 99.5%) in crosslinked and non-crosslinked forms. Preferred addition polymers tend to be glassy (a T_{g} greater than room temperature). This is the case for polyvinylchloride and polymethylmethacrylate, polystyrene polymer compositions or alloys or low in crystallinity for polyvinylidene fluoride and polyvinylalcohol materials. One preferred class of polyamide condensation polymers are nylon materials, such as nylon-6, nylon-6, 6, nylon 6, 6-6, 10, and the like. When the polymer nanowebs of the invention are formed by meltblowing, any thermoplastic polymer capable of being meltblown into nanofibers can be used, including polyolefins, such as polyethylene, polypropylene and polybutylene, polyesters such as poly (ethylene terephthalate) and polyamides, such as the nylon polymers listed above. The nanowebs can be formed from the same polymer, or the nanowebs can each be formed from different polymers.

It can be advantageous to add known-in-the-art plasticizers to the various polymers described above, in order to reduce the T_{g} of the fiber polymer. T_{g} is herein defined as the temperature at which the polymer undergoes a transition from glassy to rubbery state. Suitable plasticizers will depend upon the polymer to be electrospun or electroblown, as well as upon the particular end use into which the nanoweb will be introduced. For example, nylon polymers can be plasticized with water or even residual solvent remaining from the electrospinning or electroblowing process. Other known-in-the-art plasticizers which can be useful in lowering polymer T_{g} include, but are not limited to aliphatic glycols, aromatic sulphanomides, phthalate esters, including but not limited to those selected from the group consisting of dibutyl phthalate, dihexl phthalate, dicyclohexyl phthalate, dioctyl phthalate, diisodecyl phthalate, diundecyl phthalate, didodecanyl phthalate, and diphenyl phthalate, and the like. The Handbook of Plasticizers, edited by George Wypych, 2004 Chemtec Publishing, incorporated herein by reference, discloses other polymer/plasticizer combinations which can be used in the present invention.

The as-spun nanoweb of the present invention can be calendered in order to impart the desired physical properties to the fabric of the invention, as disclosed in EP 2 064 379. The as-spun nanoweb can be fed into the nip between two unpatterned rolls in which one roll is an unpatterned soft roll and one roll is an unpatterned hard roll, and the temperature of the hard roll is maintained at a temperature that is between the T_{g} and the Tₒₘ, herein defined as the temperature of the onset of melting of the polymer, such that the nanofibers of the nanoweb are at a plasticized state when passing through the calender nip. The composition and hardness of the rolls can be varied to yield the desired end use properties of the fabric. One roll can be a hard metal, such as stainless steel, and the other a soft-metal or polymer-coated roll or a composite roll having a hardness less than Rockwell B 70. The residence time of the web in the nip between the two rolls is controlled by the line speed of the web, preferably between about 1 m/min and about 50 m/min, and the footprint between the two rolls is the MD distance that the web travels in contact with both rolls simultaneously. The footprint is controlled by the pressure exerted at the nip between the two rolls and is measured generally in force per linear CD dimension of roll, and is preferably between about 1 mm and about 30 mm.

Further, the nanofiber web can be stretched, optionally while being heated to a temperature that is between the T_{g} and the lowest Tₒₘ of the nanofiber polymer. The stretching can take place either before and/or after the web is fed to the calender rolls and in either or both the machine direction or cross direction.

The nanofiber web can further comprise antistatic agents, antimicrobial agents, processing additives, colorants and the like.

The breathable composite fabric according to the present invention includes a fluid drainage layer disposed between the two nanofiber layers. The fluid drainage layer prevents fluid strikethrough of fluid subjected to force or pressure, such as driven rain water, fluids been driven in by compression at elbows, seat area, etc. by reducing the pressure of the fluid which penetrates the outer nanoweb, such that the inner nanoweb is subjected to a significantly reduced fluid pressure. The fluid drainage layer is a flexible structure having a thickness and mean pore size sufficient to allow fluid that has penetrated through either the inner or outer nanofiber web layer and come into contact with the fluid drainage layer to quickly pass through the fluid drainage layer and away from the compressed region. The mean pore size of the fluid drainage layer can be greater than the mean pore size of the inner and outer nanofiber web layers on either side of the fluid drainage layer. The thickness of the fluid drainage layer can be as thick, and advantageously thicker, than the thicker of the nanofiber web layers. When the fluid drainage layer is hydrophobic, greater pore sizes and porosity are preferred in order to facilitate the drainage of fluid. The material of the fluid drainage layer can be non-absorbent and porous so that in the event that fluid penetrates to the fluid drainage layer, the fluid is less likely to fully wet the fluid drainage layer and/or penetrate to the other nanofiber web layer. By "porous" is meant that the layer has an air permeability of at least 0.05 cubic meters per minute per square meter (m³/min/m²) at 20 mm water gauge. Layers with air permeabilities of 200 m³/min/m² at 20 mm water or more can be used.

Alternatively, the material of the fluid drainage layer can be absorbent and have a high wicking rate, so that in the event that fluid penetrates to the fluid drainage layer, the fluid will be quickly transported away from the penetration site.

The fluid drainage layer can be selected from the group consisting of spunbonded nonwovens, carded nonwovens, needlepunched nonwovens, air-laid nonwovens, wet-laid nonwovens, spunlaced nonwovens, spunbonded-meltblown-spunbonded nonwovens, woven fabrics, knit fabrics, meltblown nonwovens, three-dimensional meshes, nanofiber layers, combinations thereof and the like. The fluid drainage layer is optionally textured or creped to create channels in the drainage layer which direct and facilitate the passage of fluid through the fluid drainage layer and away from the compressed region. If the fluid drainage layer includes a nanofiber layer, it can be advantageous to provide a hydrophilic treatment of the nanofiber layer in order to increase the wicking rate of the fluid drainage layer.

The fluid drainage layer can be used as a collection substrate in the process for forming the nanofiber webs, by arranging the fluid drainage layer on the nanofiber web collector to collect and combine the nanofiber web spun on the substrate. The resulting combined web/fluid drainage layer can be used in the composite fabric of the garment of the invention.

The composite fabric formed by the two nanofiber web layers and the fluid drainage layer there between is breathable and can have an air permeability of between about 0.5 CFM/ft² (0.15 m³/min/m²) and about 25 CFM/ft² (7.6 m³/min/m²) and a moisture vapor transmission rate of at least about 500 g/m²/24 hr.

The fluid drainage layer and nanowebs can be optionally bonded to each other. All three layers can be bonded to each other simultaneously by point bonding or ultrasonic bonding, or only two of the three layers can be bonded. For example, the fluid drainage layer can be bonded to an adjacent nanofiber web layer. Alternatively, the nanofiber web layers can be bonded to each other in such a way that the pattern of bonded regions defines a void or space between the nanowebs where the nanowebs are not bonded. The fluid drainage layer can be disposed in the void, unattached to the nanowebs. Examples of suitable bonding techniques include adhesive bonding, thermal bonding such as point bonding, and ultrasonic bonding, although any means for bonding known to one skilled in the art can be employed.

In order to improve the liquid strikethrough resistance of the composite fabric and of the garment including the composite fabric, at least one of the nanofiber web layers, preferably the outermost nanofiber web layer, can be treated with known-in-the-art fluorine-containing compounds to improve the fluid repellency of the layer(s), and render the nanofiber web layer hydrophobic and oleophobic.

In the case of adhesive bonding, the adhesive used can be any of a variety of adhesives, including dispersions and synthetic latexes. Preferably, the adhesive should have similar or better chemical resistance and thermal resistance properties than those of the fibers used in the composite fabric. Possible adhesive systems include aqueous anionic dispersions of butadiene acrylonitrile copolymers, copolymers based on acrylic esters, vinyl and vinylidene chloride polymers and copolymers produced by emulsion polymerization, styrene-butadiene copolymers, and terpolymers of butadiene, styrene, and vinyl pyridine.

Different methods of adhesively bonding the nanoweb(s) to the fluid drainage layer can be used. For example, the nanoweb(s) can be first coated in the required areas with adhesive and then the fluid drainage layer is placed in contact with the adhesive on the coated nanoweb(s). Ample heat and pressure are applied to cause the adhesive to flow into some of the pores of the nanoweb and fluid drainage layer. If the adhesive is cross-linkable, the adhesive cross-links due to the heat and results in a mechanical attachment of the nanoweb and fluid drainage layer. In a preferred embodiment, the nanoweb and fluid drainage layer are bonded using a suitable lamination technique, such as passing the materials through a nip at a temperature sufficient to melt the adhesive. One of the nip rolls can have a raised pattern on its surface in order to produce a point bonding pattern in the laminate.

The composite fabric is located in the garment between an outer fabric layer and an inner fabric layer. A wide variety of natural and synthetic fabrics are known and may be used as the outer and inner fabric layers. Typically, vestments designed for use as rugged outerwear have been constructed of relatively loosely-woven fabrics made from natural and/or synthetic fibers having a relatively low strength or tenacity (for example, nylon, cotton, polyesters, polyacrylics, polypropylene, etc.), with each fiber having a tensile strength or tenacity of less than about 8 grams per denier (gpd), more typically less than about 5 gpd, and in some cases below about 3 gpd. Such materials can have a variety of beneficial properties, for example, dyeability, breathability, lightness, comfort, and in some instances, abrasion-resistance.

Different weaving structures and different weaving densities may be used to provide several alternative woven fabrics as a component of the invention. Weaving structures such as plain woven structures, reinforced plain woven structures (with double or multiple warps and/or wefts), twill woven structures, reinforced twill woven structures (with double or multiple warps and/or wefts), satin woven structures, reinforced satin woven structures (with double or multiple warps and/or wefts) may be used. Stretch woven fabrics, ripstops, dobby weaves, and jacquard weaves are also suitable for use in the present invention.

Nonwoven fabrics can alternatively be used as the outer fabric layer and optional inner fabric layer. Examples of nonwoven sheets include spunbonded webs, melt blown webs, multi-directional, multi-layer carded webs, air-laid webs, wet-laid webs, spunlaced webs and composite webs comprising more than one nonwoven sheet. Suitable spunbonded webs comprise polyolefin fibers, particularly polyethylene or polypropylene. The polyolefin fibers may contain minor amounts of other comonomer units. As used herein, the term "spunbonded web" means nonwoven web formed of filaments which have been extruded, drawn, and deposited on a continuous collection surface. Bonding can be accomplished by any of several methods including point or pattern bonding, calendering or passing the nonwoven fabric through a saturated-steam chamber at an elevated pressure. An example of a suitable spunbonded polyolefin sheet material is flash spun polyethylene available under the trade name Tyvek® from E. I. du Pont de Nemours and Company.

The composite fabric may be bonded to the inner fabric layer and/or outer fabric layer over some fraction of its surface by any known means, for example adhesively, thermally, using an ultrasonic field, or by solvent bonding. One or more adhesives may optionally be used to bond the composite fabric to the inner and/or outer layer fabrics. One suitable adhesive is a thermoplastic adhesive, which can be softened upon heating, then hardened upon cooling over a number of heating and cooling cycles. An example of such a thermoplastic adhesive is a hot melt adhesive. In one embodiment the nanoweb is bonded adhesively using a solution of a polymeric adhesive such as a polyurethane, and allowing the solvent to evaporate. In a further embodiment, when the nanoweb is electrospun directly onto a fabric, the solvent in which the nanoweb is spun is used to achieve solvent bonding.

## Claims

1. A garment comprising a breathable composite fabric, an outer fabric layer and an inner fabric layer, **characterised by** said breathable composite fabric comprising two nanofiber web layers and a porous fluid drainage layer disposed therebetween.

2. The garment of claim 1 wherein the fluid drainage layer is bonded to one or both nanofiber web layers by means of adhesive bonding, thermal bonding, ultrasonic bonding, solvent bonding or any combination thereof or
wherein the composite fabric is bonded to at least one of the outer and inner fabric layers.

3. The garment of claim 1 wherein the fluid drainage layer is selected from the group consisting of spunbonded nonwovens, carded nonwovens, needlepunched nonwovens, air-laid nonwovens, wet-laid nonwovens, spunlaced nonwovens, spunbonded-meltblown-spunbonded nonwovens, woven fabrics, knit fabrics, meltblown nonwovens, three-dimensional meshes, nanofiber layers and combinations thereof.

4. The garment of claim 3 wherein the fluid drainage layer is textured or creped to facilitate the passage of fluid therethrough.

5. The garment of claim 1 wherein the breathable composite fabric has an air permeability of between about 0.15 m³/min/m²and about 7.6 m³/min/m² and a moisture vapor transmission rate of at least about 500 g/m²/day or wherein the outermost nanofiber web layer is treated with a fluorine-containing compound or wherein the mean pore size of the fluid drainage layer is at least as large as the mean pore size of one of the nanofiber web layers and the fluid drainage layer is at least as thick as the thicker of the nanofiber web layers.

6. The garment of claim 1 wherein the fluid drainage layer is non-absorbent or wherein the fluid drainage layer is absorbent.

7. The garment of claim 1 wherein the outer and inner fabric layers are woven fabrics comprising fibers selected from the group consisting of nylon, cotton, polyesters, polyacrylics, polyproppylene, and combinations thereof.

8. The garment of claim 1 wherein the nanofiber web layers are bonded to each other in a pattern defining a void therebetween and the fluid drainage layer is unattachedly disposed between the nanofiber web layers within the void.

9. The garment of claim 1 wherein the nanofiber web layers are produced by electrospinning or electroblowing directly onto the surface of the fluid drainage layer and the nanofiber web layers and the fluid drainage layer are bonded to each other by residual solvent from the electrospinning or electroblowing processes.

10. The garment of claim 1 wherein the nanofiber web layers comprise nanofibers of a polymer selected from the group consisting of polyacetals, polyamides, polyesters, cellulose ethers, cellulose esters, polyalkylene sulfides, polyarylene oxides, polysulfones, modified polysulfone polymers and mixtures thereof or wherein the nanofiber web layers comprise nanofibers of a polymer selected from the group consisting of poly(vinylchloride), polymethylmethacrylate, polystyrene, and copolymers thereof, poly(vinylidene fluoride), poly(vinylidene chloride), polyvinylalcohol in crosslinked and non-crosslinked forms or wherein the nanofiber web layers comprise nanofibers of a polymer selected from the group consisting of nylon 6, nylon 5, 6, and nylon 6, 6-6, 10.

11. The garment of claim 1 wherein each of the two nanofiber web layers comprises a different polymer.

12. The garment of claim 1 wherein the nanofiber web layers are calendered or wherein the composite fabric is calendered or wherein the composite fabric is calendered while in contact with the inner and outer fabric layers.

13. The garment of claim 1 wherein at least one of the nanofiber web layers is either oleophobic or hydrophobic.

14. The garment of claim 1 wherein the outer and inner fabric layers are nonwoven fabrics.

## Patentansprüche

1. Kleidungsstück mit einem atmungsaktiven Verbundstoff, einer äußeren Stofflage und einer inneren Stofflage, **dadurch gekennzeichnet, dass** der atmungsaktive Verbundstoff zwei Nanofaservlieslagen und eine dazwischen geschichtete poröse Flüssigkeitsablaufschicht aufweist.

2. Kleidungsstück nach Anspruch 1, wobei die Flüssigkeitsablaufschicht mittels Klebeverbindung, thermischer Verbindung, Ultraschallverbindung, Lösungsmittelverklebung oder einer Kombination davon an eine oder beide Nanofaservlieslagen gebunden ist, oder wobei der Verbundstoff an mindestens eine der äußeren und inneren Stofflage gebunden ist.

3. Kleidungsstück nach Anspruch 1, wobei die Flüssigkeitsablaufschicht aus der Gruppe ausgewählt ist, die aus spinngebundenen Vliesen, kardierten Vliesen, vernadelten Vliesen, luftgelegten Vliesen, Nassvliesen, wasserstrahlverfestigten Vliesen, spinngebunden-schmelzgeblasen-spinngebundenen Vliesen, Geweben, Gewirken, schmelzgeblasenen Vliesen, dreidimensionalen Maschenstrukturen, Nanofaserlagen und Kombinationen davon besteht.

4. Kleidungsstück nach Anspruch 3, wobei die Flüssigkeitsablaufschicht texturiert oder gekreppt ist, um den Durchgang von Flüssigkeit durch die Schicht zu erleichtern.

5. Kleidungsstück nach Anspruch 1, wobei der atmungsaktive Verbundstoff eine Luftdurchlässigkeit zwischen etwa 0,15 m³/min/m² und etwa 7,6 m³/min/m² und eine Wasserdampfdurchlässigkeit von mindestens etwa 500 g/m²/Tag aufweist, oder
wobei die äußerste Nanofaservlieslage mit einer fluorhaltigen Verbindung behandelt ist, oder
wobei die mittlere Porengröße der Flüssigkeitsablaufschicht mindestens ebenso groß wie die mittlere Porengröße einer der Nanofaservlieslagen ist und die Flüssigkeitsablaufschicht mindestens ebenso dick wie die dickere von den Nanofaservlieslagen ist.

6. Kleidungsstück nach Anspruch 1, wobei die Flüssigkeitsablaufschicht nichtabsorbierend ist, oder wobei die Flüssigkeitsablaufschicht absorbierend ist.

7. Kleidungsstück nach Anspruch 1, wobei die äußere oder innere Stofflage Gewebe mit Fasern sind, die aus der Gruppe ausgewählt sind, die aus Nylon, Baumwolle, Polyestern, Polyacrylen, Polypropylen und Kombinationen davon besteht

8. Kleidungsstück nach Anspruch 1, wobei die Nanofaservlieslagen in einer Struktur aneinander gebunden sind, die dazwischen einen Hohlraum definiert, und wobei die Flüssigkeitsablaufschicht innerhalb des Hohlraums unbefestigt zwischen den Nanofaservlieslagen angeordnet ist.

9. Kleidungsstück nach Anspruch 1, wobei die Nanofaservlieslagen durch Elektrospinnen oder Elektroblasen direkt auf die Oberfläche der Flüssigkeitsablaufschicht erzeugt werden und die Nanofaservlieslagen und die Flüssigkeitsablaufschicht durch Restlösungsmittel aus den Elektrospinn- oder Elektroblasverfahren aneinander gebunden werden.

10. Kleidungsstück nach Anspruch 1, wobei die Nanofaservlieslagen Nanofasern aus einem Polymer aufweisen, das aus der Gruppe ausgewählt ist, die aus Polyacetalen, Polyamiden, Polyestern, Celluloseethern, Celluloseestern, Polyalkylensulfiden, Polyarylenoxiden, Polysulfonen, modifizierten Polysulfonpolymeren und Gemischen daraus besteht, oder
wobei die Nanofaservlieslagen Nanofasern aus einem Polymer aufweisen, das aus der Gruppe ausgewählt ist, die aus Poly(vinylchlorid), Polymethylmethacrylat, Polystyrol und dessen Copolymeren, Poly(vinylidenfluorid), Poly(vinylidenchlorid), Polyvinylalkohol in vernetzten und nichtvernetzten Formen besteht, oder
wobei die Nanofaservlieslagen Nanofasern aus einem Polymer aufweisen, das aus der Gruppe ausgewählt ist, die aus Nylon 6, Nylon 6,6 und Nylon 6, 6-6, 10 besteht.

11. Kleidungsstück nach Anspruch 1, wobei jede der zwei Nanofaservlieslagen ein anderes Polymer aufweist.

12. Kleidungsstück nach Anspruch 1, wobei die Nanofaservlieslagen kalandriert werden, oder
wobei der Verbundstoff kalandriert wird, oder
wobei der Verbundstoff kalandriert wird, während er sich im Kontakt mit der inneren und äußeren Stofflage befindet.

13. Kleidungsstück nach Anspruch 1, wobei mindestens eine der Nanofaservlieslagen entweder oleophob oder hydrophob ist.

14. Kleidungsstück nach Anspruch 1, wobei die innere und äußere Stofflage Faservliese sind.

## Revendications

1. Vêtement comprenant un tissu composite respirant, une couche de tissu extérieure et une couche de tissu intérieure, **caractérisé en ce que** ledit tissu composite respirant comprend deux couches de voile de nanofibres et une couche poreuse d'évacuation de fluide disposée entre elles deux.

2. Vêtement selon la revendication 1 dans lequel la couche d'évacuation de fluide est liée à l'une ou aux deux couches de voile de nanofibres par liaison adhésive, thermoliage, liage par ultrasons, collage par solvant ou toute combinaison des précédents, ou dans lequel le tissu composite est lié à au moins une des couches de tissu extérieure et intérieure.

3. Vêtement selon la revendication 1 dans lequel la couche d'évacuation de fluide est choisie dans le groupe constitué des non tissés filés-liés, des non tissés cardés, des non tissés aiguilletés, des non tissés formés par voie pneumatique, des non tissés formés par voie humide, des non tissés lacés par filage, des non tissés filés-liés/extrudés par soufflage/filés-liés, des textiles tissés, des tricots, des non tissés extrudés par soufflage, des mailles tridimensionnelles, des couches de nanofibres et des combinaisons des précédents.

4. Vêtement selon la revendication 3 dans lequel la couche d'évacuation de fluide est texturée ou crêpée pour faciliter le passage de fluide à travers ladite couche.

5. Vêtement selon la revendication 1 dans lequel le tissu composite respirant présente une perméabilité à l'air comprise entre environ 0,15 m³/min/m² et environ 7,6 m³/min/m² et un taux de transmission de la vapeur humide d'au moins environ 500 g/m²/jour, ou
dans lequel la couche de voile de nanofibres la plus extérieure est traitée avec un composé fluoré, ou
dans lequel la taille moyenne des pores de la couche d'évacuation de fluide est au moins aussi grande que la taille moyenne des pores de l'une des couches de voile de nanofibres, et la couche d'évacuation de fluide est au moins aussi épaisse que la plus épaisse des couches de voile de nanofibres.

6. Vêtement selon la revendication 1 dans lequel la couche d'évacuation de fluide est non absorbante, ou dans lequel la couche d'évacuation de fluide est absorbante.

7. Vêtement selon la revendication 1 dans lequel les couches de tissu extérieure et intérieure sont des textiles tissés comprenant des fibres choisies dans le groupe constitué du nylon, du coton, des polyesters, des polyacryliques, du polypropylène, et des combinaisons des précédents.

8. Vêtement selon la revendication 1 dans lequel les couches de voile de nanofibres sont liées l'une à l'autre dans une configuration délimitant un espace vide entre elles, et la couche d'évacuation de fluide est disposée de manière libre entre les couches de voile de nanofibres à l'intérieur de l'espace vide.

9. Vêtement selon la revendication 1 dans lequel les couches de voile de nanofibres sont produites par électrofilage ou filage par électrosoufflage directement sur la surface de la couche d'évacuation de fluide et les couches de voile de nanofibres et la couche d'évacuation de fluide sont liées les unes aux autres par le solvant résiduel résultant des procédés d'électrofilage ou de filage par électrosoufflage.

10. Vêtement selon la revendication 1 dans lequel les couches de voile de nanofibres comprennent des nanofibres d'un polymère choisi dans le groupe constitué des polyacétals, des polyamides, des polyesters, des éthers de cellulose, des esters de cellulose, des polysulfures d'alkylène, des polyoxydes d'arylène, des polysulfones, des polysulfones modifiées et des mélanges des précédents, ou
dans lequel les couches de voile de nanofibres comprennent des nanofibres d'un polymère choisi dans le groupe constitué du polychlorure de vinyle, du polyméthacrylate de méthyle, du polystyrène, et des copolymères des précédents, du polyfluorure de vinylidène, du polychlorure de vinylidène, du polyalcool vinylique sous des formes réticulées et non réticulées, ou
dans lequel les couches de voile de nanofibres comprennent des nanofibres d'un polymère choisi dans le groupe constitué du nylon 6, du nylon 6,6, et du nylon 6,6-6,10.

11. Vêtement selon la revendication 1 dans lequel chacune des deux couches de voile de nanofibres comprend un polymère différent.

12. Vêtement selon la revendication 1 dans lequel les couches de voile de nanofibres sont calandrées, ou
dans lequel le tissu composite est calandré, ou
dans lequel le tissu composite est calandré pendant qu'il est au contact des couches de tissu intérieure et extérieure.

13. Vêtement selon la revendication 1 dans lequel au moins une des couches de voile de nanofibres est oléophobe ou hydrophobe.

14. Vêtement selon la revendication 1 dans lequel les couches de tissu extérieure et intérieure sont des textiles non tissés.
